# EUROPÄISCHE PATENTANMELDUNG

(11) **EP 1 170 114 A1**
(43) Veröffentlichungstag der Anmeldung: **09.01.2002**
(21) Anmeldenummer: 01112198.5
(22) Anmeldetag: 18.05.2001
(51) Int. Cl.: B29C 61/00, C08L 51/06, C08J 3/24

(54) **Feuchtigkeitsvernetzbare Schrumpfartikel aus Polyolefinelastomeren**

(30) Priorität: 05.07.2000 DE 10032644
(71) Anmelder: REHAU AG + Co, 95111 Rehau (DE)
(72) Erfinder: Steffl, Udo, Dr., 95111 Rehau (DE); Rhönisch, Thomas, Dr., 95111 Rehau (DE)

(57) **Zusammenfassung**

Die Erfindung betrifft feuchtigkeitsvernetzbare Schrumpfartikel aus flexiblen Polyolefinelastomeren, dadurch gekennzeichnet, dass sie mindestens aus den folgenden zwei Komponenten zusammengesetzt sind:
100 Gewichtsteile einer silangepropften Polyolefinmischung mit mindestens einem Polyolefinelastomer mit einer Dichte < 0,92 g/cm³ und 0 - 400 Gewichtsteile eines Füllstoffes und/oder einer halogenhaltigen Verbindung und/oder einer synergistischen Mischung aus halogenhaltiger Verbindung mit Antimontrioxid.

## Beschreibung

Die vorliegende Erfindung betrifft Schrumpfartikel aus silangepfropften, flexiblen Polyolefinelastomeren.
Derartige Wärmeschrumpfartikel, wie Schrumpfschläuche oder -kappen und dergleichen werden aus einer Vielzahl von Polymerwerkstoffen hergestellt. Dabei werden sowohl Thermoplaste als auch Elastomere und thermoplastische Elastomere eingesetzt.
Im Bereich der Thermoplaste wird nach wie vor neben geringen Mengen Fluorkunststoffen vor allem Poly(vinylchlorid) eingesetzt. Im Bereich der Elastomeren sind vernetzte Polyolefin-Homo- und Copolymere in Verwendung.

Die Vernetzung der Polyolefine kann nach verschiedenen chemischen, aber auch physikalischen Methoden erfolgen. Wie beispielsweise von H. U. Voigt "Über das Vernetzen von Polyolefinen" in Kautschuk, Gummi, Kunststoff 34. Jahrgang, Nr. 3/1981, S. 197 ff beschrieben, kann bei den technisch bedeutsamen Vernetzungstechnologien zwischen Strahlenvernetzung, Peroxidvernetzung und Silanvernetzung unterschieden werden.

Das letztgenannte Verfahren unterscheidet sich von den anderen Vernetzungsmethoden vor allem durch die Prozeßtechnik. Dabei werden in einem Primärschritt zunächst Polymerkettenradikale mit Hilfe üblicher Radikalinitiatoren erzeugt. An diese reaktiven Stellen addieren sich Silanmoleküle mit ihrer Vinylfunktion. Die silangepfropften Polymere befinden sich hier noch im thermoplastischen Zustand. Die eigentliche Vernetzung findet dann nach der Formgebung durch eine Silankondensationsreaktion mittels Feuchtigkeit statt.

Diese Vernetzungstechnik ist in der US 3,646,155 beschrieben.

Bei der Silanvernetzung können ― wie ebenfalls in GB 1526398 beschrieben - auch alle Additive inklusive Katalysator gleichzeitig in einen speziell ausgelegten Extruder dosiert werden, das Silan auf das Polymere aufgepfropft und zum Formteil verarbeitet werden.
In der EP 0426073 ist ein Trocken-Silan-Batch für das Einstufen-Verfahren, bei dem ein poröses Trägermaterial den Silancocktail aufsaugt beschrieben.

Vorteilhaft für die Silanvernetzung gegenüber der Strahlenvernetzung ist die homogenere Verteilung der Vernetzungsstellen durch die vorherige Schmelzedispergierung der Silanmoleküle, die geringeren Investment- und Energiekosten durch z B Wegfall der Strahlenschutzvorkehrungen und der wirtschaftlicheren Vernetzung durch Feuchtigkeit, aber auch verbesserte mechanische Eigenschaften wie die Alterungsbeständigkeit.

Als Alternative zum Silanpfropfungsverfahren können die Vinylsilane auch im Hochdruckreaktor mit einpolymerisiert werden, wie in US 441,306,6 beschrieben.

Eine Anwendung solcher Silan-Co-oder Terpolymere in Wärmeschrumpfartikeln ist jedoch nicht möglich.
Zur Erzielung eines Gelgehaltes kleiner 70% muss mit unmodifizierten Polymeren rückverdünnt werden. Dies führt aus Kompatiblitätsgründen zu schlechten mechanischen Eigenschaften wie der Weiterreißfestigkeit und der Reißfestigkeit, welche sich sowohl bei der Aufweitung als auch im fertigen Schrumpfartikel negativ z B auf die Schrumpffestigkeit auswirken.

Die hier beschriebenen Silantechnologien haben inzwischen Bedeutung bei der Fertigung von Kunststoffrohren aus vernetztem Niederdruckpolyethylen (HDPE) sowie wie von B. E. Roberts und S. Verne in Proc. Golden Jubilee Conf. "Polyethylenes 1933-1983", London, UK, Juni 1983, Institute of Materials, Paper C3-1-1, beschrieben, zur Isolation und Ummantelung von Kabeln aus Hochdruckpolyethylen (LDPE) und "linear low density polyethylen" (LLDPE) gefunden. Dabei handelt es sich in der Regel um wenig flexible bis steife (Rohr) hochkristalline Basismaterialien.
Eine Verwendung von elastomeren niedrigkristallinen Poly(ethen-co-α-olefinen) wurde nicht erwähnt.

In der US 3,086,242 beschrieben ist die Verwendung von vernetzten Polyolefinen auf Basis LDPE und Poly(ethen-co-vinylacetat) als Material für wärmeschrumpfende Artikel. Dabei konkurriert die Silanvernetzung mit der Strahlenvernetzung.

Es ist jedoch bekannt, dass mögliche bei der Silanpfropfung der Poly(ethen-co-vinylacetate) abgespaltene Essigsäuremoleküle als Kondensationskatalysatoren wirken und zu einer Vorvernetzung und damit zu einer Stippenbildung der Schrumpfartikel führen. Auch die Vortrocknung der Poly(ethen-co-vinylacetate) gestaltet sich aufgrund der Polarität als schwierig. Somit ist mit den beim Stand der Technik verwendeten Poly(ethen-co-vinyl-acetaten) mit einer erhöhten Feuchtigkeitsabsorption zu rechnen.
Der Restfeuchtegehalt der nach dem Stand der Technik hergestellten Schrumpsartikel ist jedoch so hoch , dass der Oberflächenausfall nicht akzeptabel ist.
Vernetzte Polyolefine auf Basis LDPE weisen nicht die gewünschte Flexibilität für Schrumpfartikel auf. Ein niedrigschrumpfender Schrumpfartikel mit Schrumpfbeginn kleiner 90°C ist auf Basis LDPE nicht realisierbar.

Zusätzlich weisen die im Stand der Technik eingesetzten Rohmaterialien für silangepfropfte Wärmeschrumpfartikel auf Basis LDPE und/oder Poly(ethen-co-vinylacetat) aufgrund der hohen Kristallinität lange Vernetzungszeiten im Klimaraum oder Wasserbad auf und erfordern durch die breite Molmassenverteilung eine höhere Silan-Peroxiddosierung zu Erreichung des gewünschten Vernetzungsgrades. Dies führt zu einer unwirtschaftlichen Herstellung sowohl des Materiales als auch der Schrumpfartikel

Hier setzt die Erfindung an, die es sich zur Aufgabe gestellt hat, ein Polymermaterial zur Verfügung zu stellen, das zur Herstellung von feuchtigkeitsvernetzbaren Schrumpfartikeln geeignet ist, und welches die vorstehend genannten Nachteile und Probleme überwindet. Besonderes Kennzeichen der Erfindung ist die Silanpfropfung von elastomeren, flexiblen Poly(ethen-co-1-olefinen) in Gegenwart von Füllstoffen und oder flammhemmenden Verbindungen und Extrusion der nach der Hydrolyse zur Aufweitung angedachten Artikel.

Erfindungsgemäß wird dies dadurch gelöst, dass der feuchtigkeitsvernetzbare Schrumpfartikel mindestens aus den folgenden beiden Komponenten zusammengesetzt ist:
100 Gewichtsteile der Komponente (A), bestehend aus einer silangepfropften Polyolefinmischung mit mindestens einem Polyolefinelastomer mit einer Dichte kleiner 0,92 g/cm³ und 0 bis 400 Gewichtsprozent der Komponente (B), bestehend aus einem oder mehreren anorganischen Füllstoffen und/oder halogenhaltigen Flammschutzmitteln und/oder synergistischen Flammschutzmitteln aus Antimon- und Halogenverbindungen.

Besonders bevorzugte Komponenten (A) für die Silanpfropfung sind elastomere Ethen/1-Olefin-Copolymere ausgewählt aus der Gruppe Ethen/1-Propen-, Ethen/1-Buten-, Ethen/4-methyl-1-penten-, Ethen/1-Hexen-, Ethen/1-Hepten-, Ethen/Styrol-, und Ethen/1-Octen-Copolymere. Ganz besonders bevorzugte Komponenten (A) sind Ethen/1-Octen-Copolymere mit einem 1-Octengehalt zwischen 8 und 40 Mol.-%, einer Dichte zwischen 0,85 g/cm³ und 0,92 g/cm³ und einer Molgewichtsverteilung M_{w}/Mₙ zwischen 1.5 und 3.5 und Blends aus Ethen/1-Olefin-Copolymeren mit Polypropylen-Homopolymeren, Ethen/α-Olefin-Copolymeren mit einem Ethylengehalt von mehr als 70%, Niederdruckpolyethylen, oder Propen/Ethen-Copolymere mit Ethylengehalt kleiner 15%. Erfindungsgemäße Komponenten (A) sind auch Ethen/α-Olefin/Dien-Terpolymere ausgewählt aus den Dienmonomeren Dicyclopentadien, 1,4-Hexadien, 1,3-Pentadien, 5-Ethyliden-2-Norbonen, 5-Vinyl-2-Norbonen und Piperylen.

Ethen/1-Octen-Co- und Terpolymere können nach dem Fachmann bekannten Methoden mit speziellen Polymerisationsverfahren z B unter Verwendung der "single site constraint geometry catalyst technology" hergestellt werden.

Besonders bevorzugte Komponenten (B) sind Calciumcarbonate, Aluminium- oder Magnesiumhydroxide, Calciumsulfate, Silikate, Kieselsäuren, Ruße, Graphite und/oder halogenhaltige organische Flammschutzmittel wie Deca-, Octa-, Pentabromdiphenylether, Hexabromdiphenoxyethan, Tetrabromphthalsäureanhydrid, Tetrabromphthalsäurediole und -polyether, Ethylenbistetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonat-oligomere, bromierte Epoxidharze auf Basis TBBA, Poly(dibromphenylether), Poly(pentabrombenzylacrylat), Poly(tribromstyrol), Hexabromcyclododecan, Ethylen-bis(dibromnorbonan-di-carboximid), Dibromethyldibromcyclohexan, Dibromneopentylglykol u/o chlorierte cycloaliphatische Verbindungen wie Dechlorane Plus oder HET-Säure. Erfindungsgemäße Komponenten (B) sind auch synergistische Kombinationen aus den aufgezählten halogenhaltigen Verbindungen mit Antimonverbindungen wie Diantimontrioxid. Bevorzugte gewichtsprozentuale Anteile der Komponenten (B) in der Mischung von (A) und (B) sind 0 bis 400 Gew.-%.

Die Aufgabe bezüglich der Entwicklung eines feuchtigkeitsvernetzbaren Schrumpfartikels aus elastomeren Poly(ethen-co-1-olefinen) ist dadurch gelöst, dass auf das Polymermaterial aus den Komponenten (A) in Gegenwart der Komponenten (B) ein Organosilan der allgemeinen Formel RSiX₃ unter Zugabe eines organischen Peroxids aufgepfropft, der Schrumpfartikel ausgeformt und mittels Feuchtigkeit vernetzt wird.

Bevorzugte Organosilane der allgemeinen Formel RSiX₃ sind Vinyltrimethoxysilan, Vinyltriethoxysilan oder Gamma-(meth)acryloxypropyltrimethoxysilan, bevorzugte radikalerzeugende Komponenten sind organische Alkylperoxide mit Halbwertszeiten von 0.1 h bei Temperaturen > 80°C, insbesondere 2,5-Dimethyl-2,5-di(tertbutylperoxo)hexan u/o 2,5-Dimethyl-2,5-di(tertbutylperoxo)3-hexin u/o Di(tertbutyl)peroxid u/o 1,3-Di(tertbutylperoxoisopropyl)benzol u/o Dicumylperoxid u/o Tertbutylcumylperoxid.

Ganz besonders bevorzugt sind bereits abgemischte "Silancocktails" inklusive Vernetzungskatalysator und Stabilisatoren, wie sie käuflich bei den Rohstoffherstellern zu beziehen sind.

Durch die erfindungsgemäße Verwendung von elastomeren Poly(ethen-co-1-olefinen) als Basis der Wärmeschrumpfartikel können die bei der Verarbeitung und Silanpfropfung der Poly(ethen-co-vinylacetate) auftretenden Schwierigkeiten vermieden werden. Zum einen weisen die unpolaren Poly(ethen-co-1-olefinen) einen geringeren Restfeuchtegehalt auch nach Vortrockung gegenüber Poly(ethen-co-vinylacetaten) auf, zum anderen findet keine Abspaltung von Essigsäuremolekülen aufgrund thermischer Zersetzung im Extruder statt.

Beides würde zu einer vorzeitigen Kondensation der aufgepfropften Alkoxysilangruppen führen und äußert sich im extrudierten und danach aufgeweiteten Schrumpfartikel in Form von Stippen oder Gelpartikeln.

Verbunden mit den niedrigen Schmelzpunkten der verwendeten erfindungsgemäßen Poly(ethen-co-1-olefinen) als Basis der Wärmeschrumpfartikel können die Eigenschaften Niedrigschrumpfend oder Schnellschrumpfend und flexibel ― wie sie von vielen Anwendern aus wirtschaftlichen und energetischen Gründen gefordert werden ― beliebig eingestellt und variiert werden.

Die enge Molmassenverteilung der erfindungsgemäß eingesetzten, silangepfropften Poly(ethen-co-1-olefinen) als Basis für die Wärmeschrumpfartikel führt zu hohen Vernetzungsgraden bei reduziertem Silanverbrauch gegenüber den bisher verwendeten Poly(ethen-co-vinylacetaten) und LDPE. Weiterhin kann durch die erfindungsgemäße Verwendung der beschriebenen Polymergemische als Basis der Wärmeschrumpfartikel die Vernetzungszeit drastisch erniedrigt werden. Aufgrund der geringeren Kristallinität gegenüber Poly(ethen-co-vinylacetaten) läuft die diffusionskontrollierte Hydrolyse- und Kondensationsreaktion der Alkoxysilane wesentlich schneller ab.

Bei Verwendung der im Hochdruckreaktor hergestellten Silan-Co- und Terpolymere als Polymermaterial für Wärmeschrumpfartikel muss zur Erzielung eines bestimmten Gelgehaltes im Bereich kleiner 70% mit unmodifizierten Polymeren "rückverdünnt" werden. Dies führt aus Kompatibilitätsgründen zu verschlechterten mechanischen Eigenschaften, insbesondere bei der Weiterreißfestigkeit. Durch die erfindungsgemäße Verwendung von elastomeren, eigengepfropften Poly(ethen-co-1-olefinen) als Basis sind wesentlich verbesserte mechanische Kennwerte zu bekommen, welche die Parameter und Freiheitsgrade bei der Aufweitung der Schrumpfartikel erweitern.

So können in den erfindungsgemäßen Schrumpfartikeln aufgrund der homogenen Vernetzung Wanddickenexzentrizitäten zwischen 10 und 20% nach dem Aufweiten durch ein beliebiges Aufweitverfahren mühelos erreicht werden.

Die in dieser Erfindung beschriebenen flammgeschützten Schrumpfartikel weisen gegenüber den bekannten silanvernetzten Poly(ethen-co-vinylacetaten) und LDPE eine beschleunigte Flammschutz- und /oder Füllstoffaufnahme und reduzierte Rauchgasentwicklung auf.

Dem erfindungsgemäßen Polymermaterial können eine Reihe weiterer Verbindungen zugesetzt werden, z B Gleit- oder Verarbeitungsmittel, Nukleierungsmittel, Stabilisatoren, Antistatika, Prozessöle, Pigmente oder Treibmittel.

Unter die erfindungsgemäßen feuchtigkeitsvernetzbaren Schrumpfartikel aus flexiblen Polyolefinelastomeren fallen universell einsetzbare, flammwidrige Standardschrumpfschläuche, Schrumpfschläuche für Bauteile mit extrem unterschiedlichen Durchmessem und Schrumpfraten 3:1, selbstverlöschende Schrumpfschläuche, Schrumpfschläuche in beliebigen Farben, Schrumpfschläuche für Bauteile mit engen Radien, halogenfreie Schrumpfschläuche, Schrumpfschläuche mit Schrumpfbeginn kleiner 60°C, extrem dünnwandige Schrumpfschläuche, Schrumpfschläuche mit Kleberbeschichtung, abriebfeste Schrumpfschläuche und Schrumpfkappen und dergleichen für die Isolation, Schutz, Kennzeichnung, Bündelung von Kabelsätzen, Isolation stromführender Teile, für Kabelsätze im Militärbereich, für Kondensatoren, Widerstände, Haltestangen, Gurtpeitschen, Griffe, zur Kennzeichnung von Erdleitern, Isolation temperaturempfindlicher Bauteile und Leitungen, Überzug für Leuchtstoffröhren, zum Abdichten gegen Feuchtigkeit, als Korrosionsschutz von Energie-und Nachrichtenkabeln, zur Aderisolation, zur Einkapselung von Steckverbindungen, Schutz von Kabelenden, von druckluftüberwachten Fernmeldekabeln, zum Abbau elektrostatischer Ladungen, als Überzug für z B Motorsägenbügel, Walzen, Liftbügel, Antennen oder zur Isolation von Werkzeugen und dergleichen.

### Beispiele

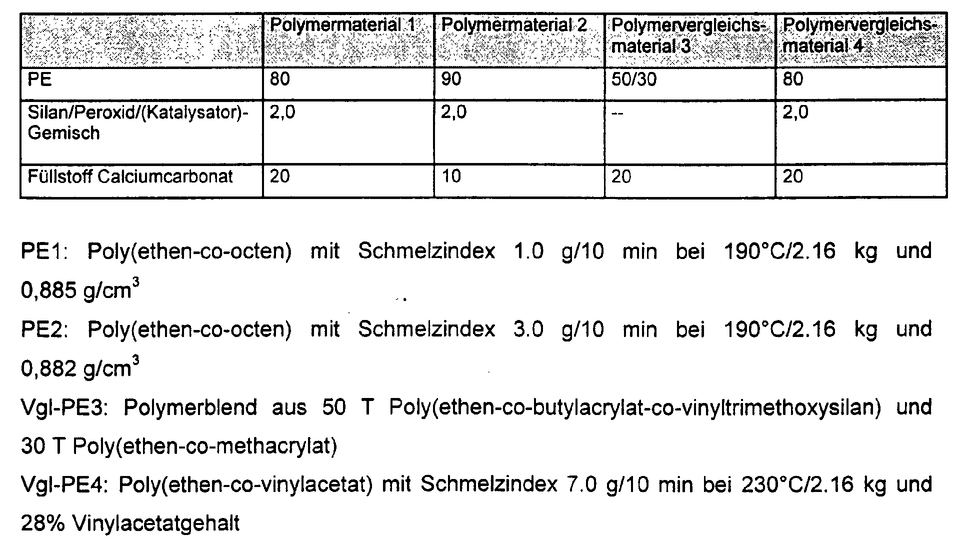

Mechanische Eigenschaften der erfindungsgemäßen Polymermaterialien im Vergleich zum Stand der Technik:

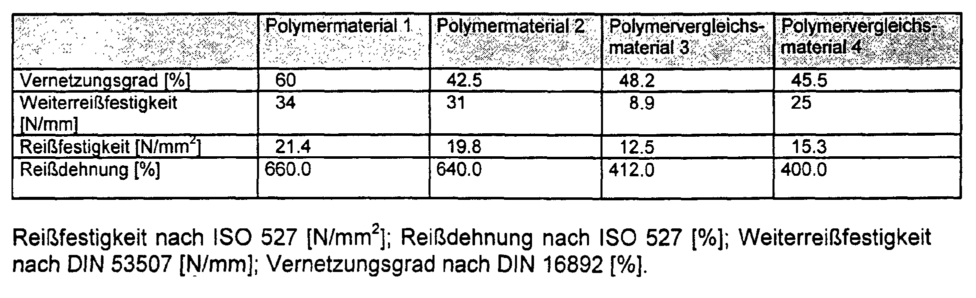

## Patentansprüche

1. Feuchtigkeitsvernetzbare Schrumpfartikel aus flexiblen Polyolefinelastomeren, **dadurch gekennzeichnet, dass** sie mindestens aus den folgenden zwei Komponenten zusammengesetzt sind:
A) 100 Gewichtsteile einer silangepfropften Polyolefinmischung mit mindestens einem Polyolefinelastomer mit einer Dichte kleiner 0.92 g/cm³ und
B) 0 bis 400 Gewichtsteile eines Füllstoffes und/oder einer halogenhaltigen Verbindung und/oder einer synergistischen Mischung aus halogenhaltiger Verbindung mit Antimontrioxid.

2. Feuchtigkeitsvernetzbare Schrumpfartikel nach Anspruch 1, **dadurch gekennzeichnet, dass** das Polyolefinelastomere der Komponente (A) ein Ethylen-α-Olefin-Copolymers und/oder Ethylen-α-Olefin-Dien-Terpolymers mit mehr als 3 Kohlenstoffatomen ist.

3. Feuchtigkeitsvernetzbare Schrumpfartikel nach Anspruch 1, **dadurch gekennzeichnet, dass** Komponente (A) eine silanmodifizierte Mischung aus den Komponenten des Anspruchs 2 und einem oder mehreren kristallinen Polyolefinen mit einem Schmelzpunkt größer 100°C ist.

4. Feuchtigkeitsvernetzbare Schrumpfartikel nach Anspruch 1, **dadurch gekennzeichnet, dass** Komponente (B) ausgewählt ist aus der Gruppe Calciumcarbonate, Aluminium- oder Magnesiumhydroxide, Calciumsulfate, Silkate, Kieselsäuren, Ruße, Graphite und/oder halogenhaltige organische Flammschutzmittel wie Deca-, Octa-, Pentabromdiphenylether, Hexabromdiphenoxyethan, Tetrabromphthalsäureanhydrid, Tetrabromphthalsäurediole und ―polyether, Ethylenbistetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonat-oligomere, bromierte Epoxidharze auf Basis TBBA, Poly(dibromphenylether), Poly(pentabrombenzylacrylat), Poly(tribromstyrol), Hexabromcyclododecan, Ethylen-bis(dibromnorbonan-di-carboximid), Dibromethyldibromcyclohexan, Dibromneopentylglykol u/o chlorierte cycloaliphatische Verbindungen wie Dechlorane Plus oder HET-Säure und/oder synergistische Kombinationen aus den aufgezählten halogenhaltigen Verbindungen mit Antimonverbindungen wie Diantimontrioxid.

5. Feuchtigkeitsvernetzbare Schrumpfartikel nach Anspruch 1, **dadurch gekennzeichnet**, dassdie silangepfropfte Polyolefinmischung in einem seperaten Pfropfungsschritt vor der Verarbeitung oder gleichzeitig mit der Verarbeitung in der Schmelze durch Reaktion von organischen Silanen der allgemeinen Formel RSiX₃ mit der Polyolefinmischung in der Gegenwart von radikalerzeugenden Komponenten erfolgt, wobei R ein olefinisch ungesättigter Kohlenwasserstoffrest und X eine hydrolisierbare organische Gruppe ist.

6. Feuchtigkeitsvernetzbare Schrumpfartikel nach einem der vorhergehenden Ansprüche, **dadurch gekennzeichnet, dass** das organische Silan der allgemeinen Formel RSiX₃ ausgewählt ist aus der Gruppe Vinyltrimethoxysilan, Vinyltriethoxysilan oder Gamma-(meth)acryloxypropyltrimethoxysilan.

7. Feuchtigkeitsvernetzbare Schrumpfartikel nach einem der vorhergehenden Ansprüche, **dadurch gekennzeichnet, dass** die radikalerzeugende Komponente ausgewählt ist aus der Gruppe Alkylperoxid, Acylperoxid, Ketonperoxid, Hydroperoxid, Peroxocarbonat, Perester, Peroxoketal u/o Peroxooligomeres ist.

8. Feuchtigkeitsvernetzbare Schrumpfartikel nach einem der vorhergehenden Ansprüche, **dadurch gekennzeichnet, dass** die radikalerzeugende Komponente eine Azoverbindung ist.

9. Feuchtigkeitsvernetzbare Schrumpfartikel nach einem der vorhergehenden Ansprüche, **dadurch gekennzeichnet, dass** die radikalerzeugende Komponente ein organisches Alkylperoxid ist, das eine Halbwertszeit von 0.1 h bei Temperaturen > 80°C aufweist.

10. Feuchtigkeitsvernetzbare Schrumpfartikel nach einem der vorhergehenden Ansprüche, **dadurch gekennzeichnet, dass** die radikalerzeugende Komponente ein organisches Alkylperoxid bestehend aus 2,5-Dimethyl-2,5-di(tertbutylperoxo)hexan u/o 2,5-Dimethyl-2,5-di(tertbutylperoxo)3-hexin u/o Di(tertbutyl)peroxid u/o 1,3-Di(tertbutylperoxoisopropyl)benzol u/o Dicumylperoxid u/o Tertbutylcumylperoxid ist.

11. Feuchtigkeitsvernetzbare Schrumpfartikel nach einem der vorhergehenden Ansprüche, **dadurch gekennzeichnet, dass** das α-Olefin der Polyolefinelastomeren mit mehr als 3 Kohlenstoffatomen in Komponente (A) ausgewählt ist aus der Gruppe bestehend aus 1-Propen, 1-Buten, 4-methyl-1-penten, 1-Hexen, 1-Hepten, 1-Octen oder Styrol.

12. Feuchtigkeitsvernetzbare Schrumpfartikel nach einem der vorhergehenden Ansprüche, **dadurch gekennzeichnet, dass** das Dien der Polyolefinelastomeren in Komponente (A) ausgewählt ist aus der Gruppe bestehend aus Dicyclopentadien, 1,4-Hexadien, 1,3-Pentadien, 5-Ethyliden-2-Norbonen, 5-Vinyl-2-Norbonen, Piperylen ist.

13. Feuchtigkeitsvernetzbare Schrumpfartikel nach einem der vorhergehenden Ansprüche, **dadurch gekennzeichnet, dass** das kristalline Polyolefin ausgewählt ist aus der Gruppe bestehend aus Polypropylen-Homopolymeren, Ethen/α-Olefin-Copolymeren mit einem Ethylengehalt von mehr als 70%, Niederdruckpolyethylen, oder Propen/Ethen-Copolymeren mit Ethylengehalt kleiner 15%.

14. Feuchtigkeitsvernetzbare Schrumpfartikel nach einem der vorhergehenden Ansprüche, **dadurch gekennzeichnet, dass** das Polymermaterial einen Gelgehalt im Bereich zwischen 1% und 90%, im besonderen zwischen 20% und 80% aufweist.

15. Feuchtigkeitsvernetzbare Schrumpfartikel nach einem der vorhergehenden Ansprüche, **dadurch gekennzeichnet**, dassdie Zugabe von 0 bis 200 Gewichtsteile an Zusätzen bezogen auf A - B in Form von 0 - 5 Gewichtsteilen Gleit o Verarbeitungsmitteln, 0 - 2 Gewichtsteilen Nukleierungsmitteln, 0 - 1 Gewichtsteil Stabilisatoren, 0 - 2 Gewichtsteilen Antistatika, 0 - 100 Gewichtsteilen Prozeßölen, 0 - 5 Gewichtsteilen Pigmente und/oder 0 - 3 Gewichtsteilen Treibmittel erfolgt.

16. Feuchtigkeitsvernetzbare Schrumpfartikel nach einem der vorhergehenden Ansprüche, **dadurch gekennzeichnet, dass** die Zugabe eines Katalysators oder eines Katalysatorgemisches erfolgt.

17. Feuchtigkeitsvernetzbare Schrumpfartikel nach einem der vorhergehenden Ansprüche, **dadurch gekennzeichnet, dass** der Katalysator ausgewählt ist aus der Gruppe Dibutylzinndilaurat, Dibutylzinnoxid, Zinnoctoat, Dibutylzinnmaleat oder Titanylacetonat.

18. Verwendung von feuchtigkeitsvernetzbaren Schrumpfartikeln nach den Ansprüchen 1 bis 17 zur Herstellung von flammwidrigen Standardschrumpfschläuchen, Schrumpfschläuchen für Bauteile mit extrem unterschiedlichen Durchmessern und Schrumpfraten 3:1, selbstverlöschenden Schrumpfschläuchen, Schrumpfschläuchen in beliebigen Farben, Schrumpfschläuchen für Bauteile mit engen Radien, halogenfreien Schrumpfschläuchen, Schrumpfschläuchen mit Schrumpfbeginn kleiner 60°C, extrem dünnwandigen Schrumpfschläuchen, Schrumpfschläuchen mit Kleberbeschichtung, abriebfesten Schrumpfschläuchen und Schrumpfkappen und dergleichen für die Isolation, Schutz, Kennzeichnung, Bündelung von Kabelsätzen, Isolation stromführender Teile, für Kabelsätze im Militärbereich, für Kondensatoren, Widerstände, Haltestangen, Gurtpeitschen, Griffe, zur Kennzeichnung von Erdleitern, Isolation temperaturempfindlicher Bauteile und Leitungen, Überzug für Leuchtstoffröhren, zum Abdichten gegen Feuchtigkeit, als Korrosionsschutz von Energie- und Nachrichtenkabeln, zur Aderisolation, zur Einkapselung von Steckverbindungen, Schutz von Kabelenden, von druckluftüberwachten Fernmeldekabeln, zum Abbau elektrostatischer Ladungen, als Überzug für z. B. Motorsägenbügel, Walzen, Liftbügel, Antennen oder zur Isolation von Werkzeugen und dergleichen.
